# EUROPÄISCHE PATENTANMELDUNG

(11) **EP 2 381 133 A2**
(43) Veröffentlichungstag der Anmeldung: **26.10.2011**
(21) Anmeldenummer: 11400029.2
(22) Anmeldetag: 19.04.2011
(51) Int. Cl.: F16H 37/02

(54) **Kegelreibringgetriebe und Verfahren zum stufenlosen Übertragen von Drehmomenten mittels eines Kegelreibringgetriebes**

(30) Priorität: 23.04.2010 DE 102010018297
(71) Anmelder: Rohs, Ulrich, 52351 Düren (DE)
(72) Erfinder: Rohs, Ulrich, Dr.-Ing, 52351 Düren (DE); Dräger, Christoph, 52379 Langerwehe/Jüngersdorf (DE)
(74) Vertreter: Reuther, Martin

(57) **Zusammenfassung**

Um Kegelreibringgetriebe kompakter bauen zu können, schlägt die Erfindung ein Kegelreibringgetriebe mit einem ersten Reibkegel, mit einem zweiten Reibkegel, mit einem Reibring und mit wenigstens einem weiteren Getriebeglied vor, bei welchem der erste Reibkegel mittels erster Reibkegellager rotierend um eine erste Reibkegellagerachse und der zweite Reibkegel mittels zweiter Reibkegellager rotierend um eine zweite Reibkegellagerachse gelagert ist, bei welchem die beiden Reibkegel mittels des Reibrings verspannt zueinander angeordnet sind, bei welchem sich hinsichtlich der Reibkegellagerachsen radial wirkende Hauptlagerkräfte in einer von den beiden Reibkegellagerachsen aufgespannten Lagerhauptebene erstrecken, bei welchem das wenigstens eine weitere Getriebeglied dem Reibkegel vorgeschaltet oder nachgeschaltet ist und bei welchem zwischen einem der Reibkegel und dem wenigstens einem weiteren Getriebeglied Koppelmomente wirken können, und die von den Koppelmomenten erzeugten Reaktionskräfte den Hauptlagerkräften in der Lagerhauptebene entgegen gerichtet sind.

## Beschreibung

Die Erfindung betrifft ein Kegelreibringgetriebe mit einem ersten Reibkegel, mit einem zweiten Reibkegel, mit einem Reibring und mit wenigstens einem weiteren Getriebeglied, bei welchem der erste Reibkegel mittels erster Reibkegellager rotierend um eine Reibkegellagerachse und der zweite Reibkegel mittels zweiter Reibkegellager rotierend um eine zweite Reibkegellagerachse gelagert ist, bei welchem die beiden Reibkegel mittels des Reibrings verspannt zueinander angeordnet sind, bei welchem sich hinsichtlich der Reibkegellagerachsen radial wirkende Hauptlagerkräfte in einer von den beiden Reibkegellagerachsen aufgespannten Lagerhauptebene erstrecken, bei welchem das wenigstens eine weitere Getriebeglied den Reibkegeln vorgeschaltet oder nachgeschaltet ist und bei welchem zwischen einem der Reibkegel und dem wenigstens einem weiterem Getriebeglied Koppelmomente wirken können. Darüber hinaus betrifft die Erfindung ein Verfahren zum stufenlosen Übertragen von Drehmomenten mittels eines Kegelreibringgetriebes, bei welchem bei der Drehmomenteübertragung zwischen einer Reibkegelachse und einer Getriebeseite oder umgekehrt Koppelmomente zwischen der Reibkegelseite und der Getriebeseite wirken, welche Reaktionskräfte in Reibkegellagers erzeugen.

Gattungsgemäße Kegelreibringgetriebe sind aus dem Stand der Technik gut bekannt und eignen sich hervorragend, um Drehmomente in einem Antriebsstrang stufenlos einzustellen und zwischen einer Antriebsseite und einer Abtriebsseite des Antriebsstrangs zu übertragen.

Beispielsweise ist in der WO 2006/012892 A2 ein Reibringgetriebe mit zwei um einen Spalt voneinander beabstandeten Wälzkörper beschrieben, wobei die Wälzkörper auf axialen Wälzkörperachsen umlaufend über einen Reibring miteinander korrespondieren. Der Reibring ist in einer axial frei verstellbaren Verstellbrücke um einen Verstellweg axial entlang dem Spalt verlagerbar angeordnet ist. Hierbei ist die Verstellbrücke mittels einer einzigen axialen Führungseinrichtung gelagert, sodass das Reibringgetriebe aufgrund der einzigen Führungseinrichtung besonders klein bauen kann.

Ein weiteres Kegelreibringgetriebe ist beispielsweise aus der Druckschrift GB-PS 298676 bekannt, bei welchem parallel zu Achsen von Kegelreibrädern auf einer Führungsachse ein Führungsglied geführt ist, welches einen Reibring entlang der Kegelreibräder führt. Hierdurch kann zwar eine stufenlose Verstellung des Übersetzungsverhältnisses des Kegelreibringgetriebes erzielt, jedoch ist für die Verstellung des Reibrings ein besonderer Antrieb erforderlich, der das Kegelreibringgetriebe wiederum baulich sehr aufwändig gestaltet.

Ein wieder kompakter bauendes Kegelreibringgetriebe ist in der WO 2005/061928 A2 mit wenigstens zwei Getriebegliedern in Form von Kegelreibrädern und mit wenigstens einem Verbindungsglied in Form eines Reibringes beschrieben. Mittels des Reibrings sind die Getriebeglieder miteinander wirkverbunden. Der Reibring ist in seiner Position stufenlos gegenüber den Getriebegliedern verlagerbar angeordnet. Um den Reibring zwischen den beiden Kegelreibrädern stufenlos verstellen zu können, ist der Reibring in einer Führungseinrichtung angeordnet, welche um eine Drehachse schwenkbar gelagert ist, deren Achsenrichtung eine Komponente umfasst, welche parallel zu einer durch die beiden Achsen der Kegelreibräder aufgespannten Ebene angeordnet ist. Das Einsatzgebiet dieses Kegelreibringgetriebes findet sich beispielsweise bei einem Kegelringgetriebe, bei welchem ein Drehmoment etwa von einem Eingangskegel über den rotierenden Reibring auf einen Ausgangskegel übertragen werden soll. Die hier verwendete Führungseinrichtung ermöglicht es, die Steuerung des Reibringes sehr klein zu halten, sodass das Kegelreibringgetriebe auch in Fahrzeuggetrieben vorteilhaft eingesetzt werden können.

Mittels der vorstehend genannten Kegelreibringgetriebe gelingt es zwar gut, zu übertragende Drehmomente stufenlos zu verstellen, insbesondere wenn sie relativ klein bauende Führungen bzw. Steuerungen eines hierfür erforderlichen Reibringes aufweisen, jedoch bauen bekannte Kegelreibringgetriebe aufgrund ihrer relativ großen Reibkegellagerungen immer noch recht groß. Dies ist insbesondere im Zusammenhang mit Kraftfahrzeuggetrieben hinderlich, da im Automobilbereich immer größerer Wert auf kompaktere und gewichtsreduziertere Fahrzeugkomponente gelegt wird.

Der Erfindung liegt die Aufgabe zugrunde, bekannte Kegelreibringgetriebe dahingehend weiterzuentwickeln, dass sie noch kleiner gebaut werden können als dies bisher üblich ist.

Die Aufgabe der Erfindung wird einerseits von einem Kegelreibringgetriebe mit einem ersten Reibkegel, mit einem zweiten Reibkegel, mit einem Reibring und mit wenigstens einem weiteren Getriebeglied gelöst, bei welchem der erste Reibkegel mittels erster Reibkegellager rotierend um eine erste Reibkegellagerachse und der zweite Reibkegel mittels zweiter Reibkegellager rotierend um eine zweite Reibkegellagerachse gelagert ist, bei welchem die beiden Reibkegel mittels des Reibrings verspannt zueinander angeordnet sind, bei welchem sich hinsichtlich der Reibkegellagerachsen radial wirkende Hauptlagerkräfte in einer von den beiden Reibkegellagerachsen aufgespannten Lagerhauptebene erstrecken, bei welchem das wenigstens eine weitere Getriebeglied den Reibkegeln vorgeschaltet oder nachgeschaltet ist und bei welchem zwischen einem der Reibkegel und dem wenigstens einem weiteren Getriebeglied Koppelmomente wirken können, und die von den Koppelmomenten erzeugten Reaktionskräfte den Hauptlagerkräften in der Lagerhauptebene entgegen gerichtet sind.

Dadurch, dass die von den Koppelmomenten erzeugten Reaktionskräfte den Hauptlagerkräften der Reibkegellager entgegen gerichtet sind, können die Reibkegellager vorteilhafter Weise wesentlich kleiner ausgelegt werden als dies bei herkömmlich konstruierten Kegelreibringgetrieben der Fall ist.

Dies ist besonders im Zusammenhang mit Kegelreibringgetrieben vorteilhaft, da bei diesen relativ große Reibkegellager zum Einsatz kommen müssen, um die Spannkräfte aufnehmen zu können, welche zwangsläufig bei der ,verspannen Bauweise der Reibkegel und des Reibringes auftreten. Und je höher die zu übertragenden Drehmomente gewählt sind, umso stärker müssen die Reibkegel und der Reibring miteinander verspannt sein. Auch wenn in anderen Einsatzbereichen des Maschinenbaus bereits mittels entgegen gesetzt wirkende Kräfte gearbeitet wird, um insbesondere Lagerkräfte zu reduzieren, existiert eine geeignete Bauweise hinsichtlich Kegelreibringgetriebe noch nicht, obwohl hier besonders große Lagerkräfte beherrscht werden müssen.

Die hier zum Einsatz kommenden "Reibkegellager" können beispielsweise als Kegelrollenlager, mittels welchen eine Festlagerseite eines Reibkegels realisiert wird, in Kombination mit Zylinderrollenlager als Loslagerseite ausgelegt sein. Insbesondere durch die erzielte Hauptkräftereduzierung können vorteilhafter Weise auch kompakter bauende Schrägkugellager verwendet werden.

Mit dem Begriff "Reibkegellagerachse" ist diejenige Längsachse eines Reibkegels verstanden, um welche der Reibkegel rotieren kann.

Der Begriff "Getriebeglied" beschreibt hierbei ein Bauteil des Kegelreibringgetriebes, welches nicht zu der Baueinheit "Reibkegel/Reibring" gehört und welches nicht gemeinsam mit einem Reibkegel auf dessen Reibkegellagerachse umläuft.

Hinsichtlich des hier beschriebenen Kegelreibringgetriebes bilden die beiden Reibkegel und der Reibring eine erste in sich funktionsfähige Baueinheit des Kegelreibringgetriebes, mittels welcher Drehmomente stufenlos von einer Eingangsseite des Kegelreibringgetriebes auf eine Ausgangsseite des Kegelreibringgetriebes übertragen werden können.

Dieser Baueinheit kann ein weiteres Getriebeglied vorgeschaltet und/oder nachgeschaltet sein. Ein solches Getriebeglied kann in einem Koppelbereich mit einer an einer Reibkegelseite vorgesehenen Getriebekomponente wechselwirken. Hierdurch wirken zwischen der mit einem Reibkegel oder mit einer Reibkegelwelle fest verbundenen Getriebekomponente und dem weiteren Getriebeglied Koppelkräfte, welche die Koppelmomente bedingen.

Vorteilhafter Weise liegen diese Koppelmomente derart in dem Kegelreibringgetriebe vor, dass sie Reaktionskräfte in der von den Reibkegellagerachsen aufgespannten Lagerhauptebene erzeugen. Diese Reaktionskräfte sind den in der Lagerhauptebene radial wirkenden Hauptlagerkräfte entgegen gerichtet, sodass die radial wirkenden Hauptlagerkräfte durch die Reaktionskräfte reduziert sind, wodurch wiederum kleiner dimensionierte Reibkegellager verwendet werden können.

In diesem Zusammenhang wird die Aufgabe der Erfindung auch von einem Verfahren zum stufenlosen Übertragen von Drehmomenten mittels eines Kegelreibringgetriebes gelöst, bei welchem bei der Drehmomenteübertragung zwischen einer Reibkegelseite und einer Getriebeseite oder umgekehrt Koppelmomente zwischen der Reibkegelseite und der Getriebeseite wirken, welche Reaktionskräfte in Reibkegellagern erzeugen, und wobei sich das Verfahren dadurch auszeichnet, dass diejenige Komponente der Reaktionskräfte, welche sich in einer Lagerhauptebene zweier Reibkegellagerachsen erstreckt, entgegen gesetzt einer sich in der Lagerhauptebene erstreckenden Hauptlagerkräftekomponente wirkt.

Vorteilhafter Weise werden mittels der entgegen gesetzt wirkenden Reaktionskräfte, wie vorstehend bereits erläutert, Hauptlagerkräfte reduziert, sodass an einem Kegelreibringgetriebe Reibkegellager mit einer geringeren Traglast eingesetzt werden können, wodurch das erforderliche Bauvolumen des Kegelreibringgetriebes ebenfalls reduziert werden kann.

Besonders vorteilhaft ist es, wenn die Drehrichtung der an den Reibkegeln wirkenden Momente umgekehrt wirkt, um beispielsweise einen Rückwärtsgang an einem Fahrzeug zu realisieren. Hierbei wird zwar in Kauf genommen, dass sich die Reaktionskräfte und die Hauptlagerkräfte summieren, wenn das Kegelreibringgetriebe umgekehrt laufend betrieben wird. Dies kann jedoch vernachlässigt werden, da das Kegelreibringgetriebe im Rückwärtsgang nur kurzzeitig betrieben wird und vorhandene Reibkegellager diese erhöhten Hauptlagerkräfte nur kurzzeitig ertragen müssen.

Eine bevorzugte Ausführungsvariante des Kegelreibringgetriebes sieht vor, dass die Koppelmomente durch Koppelkräfte in einem Koppelbereich bedingt sind, der radial entfernt von der Lagerhauptebene derart angeordnet ist, dass sich in der Lagerhauptebene erstreckende durch die Koppelkräfte erzeugte Reaktionskräfte sich den in der Lagerhauptebene erstreckenden Hauptlagerkräften entgegenwirken können.

Ist der Koppelbereich radial entfernt von der Lagerhauptebene angeordnet, können die Reaktionskräfte in der Lagerhauptebene konstruktiv vorteilhaft verlagert werden.

Der "Koppelbereich" ist diejenige Schnittstelle zwischen einer fest mit dem Reibkegel verbundenen Getriebekomponente und dem weiteren Getriebeglied des Kegelreibringgetriebes.

Es versteht sich, dass das weitere Getriebeglied sowohl mit einer fest mit einem Eingangsreibkegel des Kegelreibringgetriebes verbundenen Getriebekomponente als auch mit einer fest mit einem Ausgangsreibkegel verbundenen Getriebekomponente wechselwirken kann.

Somit kann auch der Koppelbereich eingangsreibkegelseitig und/oder ausgangsreibkegelseitig an dem Kegelreibringgetriebe vorgesehen sein.

Eine weitere bevorzugte Ausführungsvariante sieht vor, dass reibkegelseitig an den Reibkegellagerachsen eine fest mit dem Reibkegel verbundene Getriebekomponente vorgesehen ist, die sich in einem Koppelbereich mit dem wenigstens einem weiteren Getriebeglied in Eingriff befindet.

Die Getriebekomponente kann hierbei beispielsweise einstückig mit dem Reibkegel ausgebildet sein und weiter beispielsweise durch den Reibkegel selbst dargestellt sein. Alternativ kann die fest mit dem Reibkegel verbundene Getriebekomponente auch an einer Reibkegelwelle, welche mit dem Reibkegel um die Reibkegellagerachse rotiert, angeordnet sein. Es versteht sich, dass in letzterem Fall die Getriebekomponente direkt durch die Reibkegelwelle bereitgestellt werden kann, oder die Getriebekomponente ist beispielsweise formschlüssig mit der Reibkegelwelle verbunden. Wesentlich hierbei ist es, dass mittels der mit der fest mit dem Reibkegel verbundenen Getriebekomponente ein Koppelbereich an den Kegelreibringgetriebe gebildet werden kann, welcher radial entfernt von der Lagerhauptebene angeordnet ist.

Eine erste alternative Ausführungsvariante sieht vor, dass reibkegelseitig Zahnräder vorgesehen sind und das wenigstens eine Getriebeglied eine Kette umfasst. In einem derartigen Ausführungsbeispiel ist die fest mit dem Reibkegel verbundene Getriebekomponente als Zahnrad ausgebildet, wobei sich dieses Zahnrad mit einer Kette, welche das wenigstens eine Getriebeglied bereitstellt, im Eingriff befindet, und hierbei Koppelkräfte wirken, welche die Koppelmomente bedingen.

Kumulativ oder alternativ können reibkegelseitig Zahnräder vorgesehen sein und das wenigstens eine Getriebeglied umfasst ebenfalls ein Zahnrad. Bei dieser Ausführungsvariante kämmen Zahnräder in dem Koppelbereich des Kegelreibringgetriebes miteinander, wodurch zwischen den Zahnrädern Koppelkräfte wirken, welche die Koppelmomente bedingen.

Es versteht sich, dass je nach zu erzielender Reibkegellagerentlastung der Koppelbereich nahezu beliebig radial entfernt zu der Lagerhauptebene angeordnet sein kann. Vorzugsweise ist der Koppelbereich derart radial entfernt von der Lagerhauptebene angeordnet, dass er lotrecht zu der Lagerhauptebene angeordnet ist und das Lot durch eine der Reibkegellagerachsen geht. Ist zwischen dem Koppelbereich und einem der beiden Reibkegellagerachsen ein Lot der Lagerhauptebene angeordnet, können die mittels der Koppelmomente erzeugten Reaktionskräfte den Hauptlagerkräften in der Hauptlagerebene besonders wirkungsvoll entgegen gerichtet sein.

Vorteilhaft ist es, wenn eine Rotationsachse von rotierenden weiteren Getriebegliedern fluchtend zu den Reibkegellagerachsen und neben der von den Reibkegellagerachsen aufgespannten Lagerhauptebene angeordnet ist.

Insbesondere wenn Rotationsachsen der weiteren Getriebeglieder parallel zu den Reibkegellagerachsen verlaufen, kann das Kegelreibringgetriebe sehr kompakte bauen. Hierbei ist jedoch darauf zu achten, dass die Koppelbereiche zwischen den Getriebegliedern und den fest mit den Reibkegeln verbundenen Getriebekomponenten nicht in der Lagerhauptebene liegen, da hierdurch die Koppelmomente keine oder nur ungeeignet Reaktionskräfte in der Lagerhauptebene erzeugen können, welche den in der Lagerhauptebene angeordneten Hauptlagerkräften entgegen gerichtet sein können.

Darüber hinaus ist es vorteilhaft, wenn die Lagerhauptebene gegenüber einer Getriebeunterseite oder einer fahrbaren Oberfläche derart in dem Kegelreibringgetriebe ausgerichtet ist, dass zwischen der Lagerhauptebene und der Getriebeunterseite und/oder der fahrbaren Ebene ein Winkel von mehr als 20° angeordnet ist. Auch durch die Wahl einer solchen Winkeleinstellung ist sichergestellt, dass sich die durch Koppelkräfte erzeugte Reaktionskräfte und die vorhandenen Hauptlagerkräfte vorteilhafter Weise entgegenwirken und sich hierbei in einem ausreichenden Maße reduzieren können.

Weitere Vorteile, Ziele und Eigenschaften vorliegender Erfindung werden anhand nachfolgender Beschreibung anliegender Zeichnung erläutert, in welcher beispielhaft Kegelreibringgetriebe und Bauteile hiervon dargestellt sind.

Es zeigt
- Figur 1: schematisch ein Längsschnitt eines Getriebes mit zwei Getriebestufen, bei welchem die erste Getriebestufe ein Kegelreibringgetriebe mit einem Eingangsreibkegel, einem Ausgangsreibkegel und einem dazwischen angeordneten Reibring umfasst,
- Figur 2: schematisch eine Ansicht eines Ausgangsreibkegels mit eingezeichneten Reibringkräften,
- Figur 3: schematisch eine Axialansicht eines Kegelreibringgetriebes mit einem reibkegelseitig angeordneten Zahnrad und einem hiermit kämmenden, ein Zahnrad umfassenden Getriebeglied,
- Figur 4: schematisch eine Radialansicht eines Kegelreibringgetriebes, wie es dem Kegelreibringgetriebe aus der Figur 3 ähnlich ist,
- Figur 5: schematisch eine Axialansicht eines weiteres Kegelreibringgetriebes mit einem reibkegelseitig angeordneten Zahnrad und einem eine Kette umfassenden Getriebeglied,
- Figur 6: schematisch eine Radialansicht des weiteren Kegelreibringgetriebes aus der Figur 5, und
- Figur 7: schematisch eine Ansicht eines alternativen Kegelreibringes mit zwei Ketten.

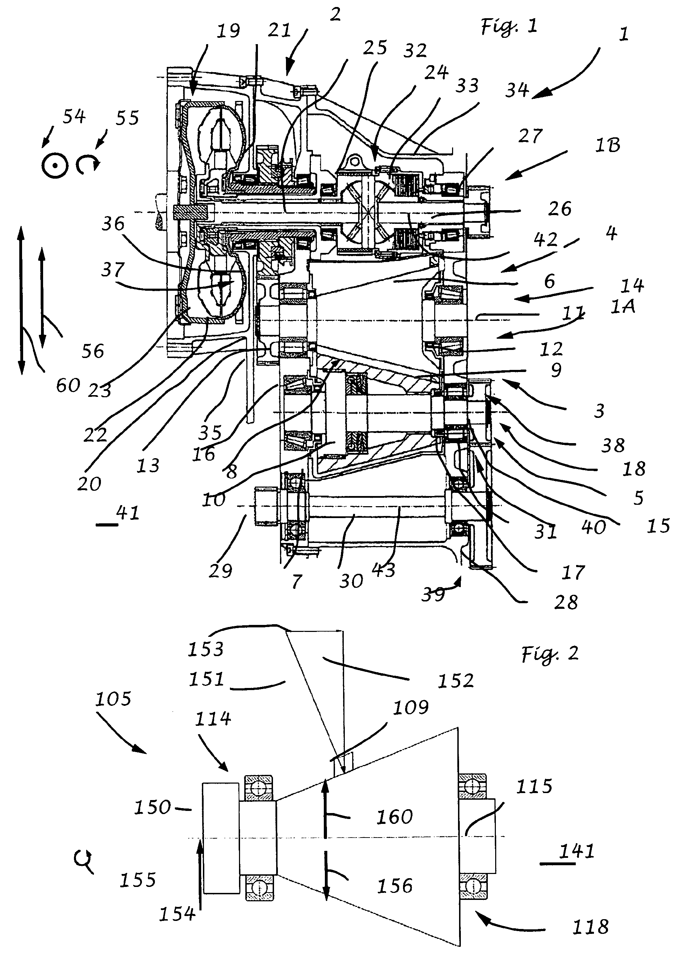

Das in der Figur 1 dargestellte Getriebe 1 umfasst im Wesentlichen zwei Getriebestufen 1A, 1B, die wahlweise über ein synchronisiertes Schaltgetriebe 2 in einen Antriebsstrang geschaltet werden können. Hierbei weist die erste Getriebestufe 1A ein Kegelreibringgetriebe 3 mit zwei gegenläufig angeordneten Reibkegeln 4, 5, wobei der erste Reibkegel 4 einen Eingangsreibkegel 6 und der zweite Reibkegel 5 einen Ausgangsreibkegel 7 des Kegelreibringgetriebes 3 darstellt. Die beiden Reibkegel 4, 5 sind derart angeordnet, dass ein Spalt 8 zwischen den Reibkegeln 4, 5 verbleibt, in welchem ein Reibring 9 den Reibkegel 4 umgreifend läuft.

Damit dieses Kegelreibringgetriebe 3 besonders hohe Drehmomente übertragen kann, umfasst der Reibkegel 5 in diesem Ausführungsbeispiel zusätzlich noch eine hier nicht näher erläuterte Anpresseinrichtung 10, welche die beiden Reibkegel 4 und 5 unter Aufbringen einer variablen Anpresskraft über den Reibring 9 verspannt.

Der erste Reibkegel 4 rotiert um eine erste Reibkegellagerachse 11 und ist einerseits mit einem Kegelrollenlager 12 und andererseits mit einem Zylinderrollenlager 13 gelagert, wobei das Kegelrollenlager 12 und das Zylinderrollenlager 13 erste Reibkegellager 14 des Kegelreibringgetriebes 3 bilden.

Der zweite Reibkegel 5 rotiert um eine zweite Reibkegellagerachse 15 und ist einerseits mit einem weiteren Kegelrollenlager 16 und andererseits mit einem weiteren Zylinderrollenlager 17 des Kegelreibringgetriebes 3 gelagert, wobei das weitere Kegelrollenlager 16 und das weitere Zylinderrollenlager 17 zweite Reibkegellager 18 des Kegelreibringgetriebes 3 bilden.

Das dargestellte Ausführungsbeispiel des Getriebes 1 umfasst darüber hinaus bezüglich des stufenlos einstellbaren Kegelreibringgetriebes 3 antriebsseitig eine Anfahrkupplung, die als Trilokwandler 19 realisiert ist.

Die das Kegelreibringgetriebe 3 umfassende Getriebestufe 1A ist über das Schaltgetriebe 2 bzw. ein Antriebszahnrad 20 und ein synchronisiertes Zahnrad 21 unmittelbar mit dem Pumpenrad 22 des Trilokwandlers 19 verbindbar, während ein Anfahren über das Turbinenrad 23 des Trilokwandlers 19 und über ein Differentialgetriebeteil 24 erfolgen kann. Letzteres Differentialgetriebeteil 24 ist mit der einen differentiellen Seite 25 mit dem Turbinenrad 23 starr verbunden, während die zweite differentielle Seite 26 als Abtrieb der zweiten Getriebestufe 1B genutzt wird und über ein Differentialgetriebezahnrad 27 mit einem Hauptabtriebswellenzahnrad 28 einer ein Abtriebsritzel 29 umfassenden Hauptabtriebswelle 30 des Getriebes 1 verbunden ist, wobei das Hauptabtriebswellenzahnrad 28 andererseits mit einem Abtriebszahnrad 31 des Kegelreibringgetriebeteils 1 kämmt. Das Abtriebsritzel 29 kann mit beispielsweise mit einem Hauptdifferential (hier nicht gezeigt) eines Kraftfahrzeuges (hier auch nicht gezeigt) kämmen.

Das Differentialgetriebeteil 24 umfasst des Weiteren zwei Reibungskupplungen 30, 31, die wahlweise den Haupteingang des Differentialgetriebeteils 24 an dem Gehäuse 34 oder an der zweiten differentiellen Seite 26 festlegen können. Hierdurch kann, wie unmittelbar ersichtlich, die Drehrichtung des Abtriebs geändert werden, wodurch ohne weiteres ein Vorwärts- und ein Rückwärtsgang realisiert werden können.

Bei geöffneten Reibungskupplungen 32, 33 läuft das Differentialgetriebeteil 24 sowie das Turbinenrad 23 frei mit, so dass das Kegelreibringgetriebe 3 trotz der Kopplung der Abtriebe genutzt werden kann. Diese Anordnung hat den Vorteil, dass zum Anfahren bzw. im Rückwärtsgang die Vorteile des Trilokwandlers 19 genutzt werden können. Darüber hinaus sind durch das Differentialgetriebeteil 24 Vor- und Rückwärtsgang auf äußerst kompakte Weise realisiert. Andererseits kann durch das Schaltgetriebe 2 der Nachteil des Trilokwandlers 19, durch Schlupf im Normalbetrieb große Leistungsverluste sowie eine Drehmomentüberhöhung zu bedingen, vermieden werden, da durch das Schaltgetriebe 2 das Turbinenrad 23 kurzgeschlossen und der Antrieb der ersten Getriebestufe 1A mit seinem Kegelreibringgetriebe 3 unmittelbar über das Pumpenrad 22 erfolgt. Die abtriebsseitige Kopplung der beiden Getriebestufen 1A und 1B ermöglicht es darüber hinaus, vor einem Schaltvorgang zwischen diesen beiden Getriebestufen 1A und 1B das Kegelreibringgetriebe 3 derart hinsichtlich seiner Übersetzung einzustellen, dass die beiden Getriebestufen 1A und 1B auch eingangsseitig nahezu synchronisiert sind. Die restliche Synchronisation kann durch das Schaltgetriebe 2 selbst vorgenommen werden, wobei auch der Trilokwandler 19 unterstützend wirken kann.

Das Antriebszahnrad 20 bildet eine erste Getriebekomponente 35, welche reibkegelseitig mit dem ersten Reibkegel 4 fest verbunden ist und hierbei mit dem Reibkegel 4 gemeinsam um die erste Reibkegellagerachse 11 rotiert.

Das synchronisierte Zahnrad 21 bildet hierbei ein erstes Getriebeglied 36, welches in einem ersten Koppelbereich 37 des Kegelreibringgetriebes 3 mit den Antriebszahnrad 20 wirkverbunden ist.

Das Abtriebszahnrad 31 bildet eine weitere Getriebekomponente 38, welche fest mit dem zweiten Reibkegel 5 verbunden ist und mit diesem um die Reibkegellagerachse 15 rotiert. Hierbei wirkt das Abtriebszahnrad 31 mit dem Hauptabtriebswellenzahnrad 28 zusammen, welches ein weiteres Getriebeglied 39 des Getriebes 1 darstellt, sodass das Hauptabtriebswellenzahnrad 28 und das Abtriebszahnrad 31 in einem weiteren Koppelbereich 40 des Kegelreibringgetriebes 3 miteinander wechselwirken.

Die beiden Reibkegellagerachsen 11 und 15 spannen eine Lagerhauptebene 41 auf, die in diesem Ausführungsbeispiel in der Papierebenen liegt.

Sowohl die Differenzialgetrieberotationsachse 42 als auch die Hauptabtriebswellenrotationsachse 43 liegen idealerweise radial entfernt von dieser Lagerhauptebene 41, sodass auch die beiden Koppelbereiche 37 und 40 radial entfernt von der Lagerhauptebene 41 angeordnet werden können.

Dadurch, dass die Koppelbereiche 37, 40 außerhalb des Lagerhauptebene 41 angeordnet werden können, können durch Koppelkräfte 54 (hier nur exemplarisch eingezeichnet) bedingte Koppelmomente 55 (hier nur exemplarisch eingezeichnet) zwischen der ersten Getriebekomponente 35 und dem ersten Getriebeglied 36 sowie der weiteren Getriebekomponente 38 und des weiteren Getriebeglieds 39 wirken. Diese Koppelmomente 55 erzeugen dann Reaktionskräfte 56 (hier nur exemplarisch eingezeichnet), welche sich den in der Lagerhauptebene 41 erstreckenden Hauptlagerkräften 60 (hier nur exemplarisch eingezeichnet) entgegen wirken können. Die Lage der Koppelmomente 55 ist hierbei nebensächlich, solange mit ihnen geeignete Reaktionskräfte 56 erzeugt werden können, die den Hauptlagerkräften 60 in geeigneter Weise entgegen wirken können.

Die Reibkegellagerachsen 11, 15 und die Differenzialgetrieberotationsachse 42 und die Hauptabtriebswellenrotationsachse 43 sind zwar idealerweise in verschiedenen Ebenen angeordnet, jedoch verlaufen sie fluchtend zueinander, da sie zumindest in diesem Ausführungsbeispiel parallel zueinander angeordnet sind.

Insbesondere die vorstehend und nachfolgend weiter beschriebenen Kräfte und Drehmomente sind nicht exemplarisch eingezeichnet, da sich deren Größe, Lage und Wirkrichtung nach den jeweiligen konstruktiven Gegebenheiten ergeben bzw. verändern können, insbesondere wenn das Kegelreibringgetriebe rückwärts betrieben wird, um einen Rückwärtsgang an einem Fahrzeuggetriebe zu realisieren. Auch kann die Art der Verzahnung der einzelnen miteinander wechselwirkenden Getriebebauteile insbesondere die Richtung der erzeugten Kräfte und/oder bedingten Momente beeinflussen.

Der in der Figur 2 gezeigte Ausgangsreibkegel 105 einer hier nicht näher gezeigten Baueinheit eines Kegelreibringgetriebes ist um eine Reibkegellagerachse 115 rotierend in einem ersten Reibkegellager 114 und ein einem zweiten Reibkegellager 118 gelagert, welche in diesem Ausführungsbeispiel als Schrägkugellager ausgebildet sind. Mit dem Ausgangsreibkegel 105 läuft reibkegelseitig ein Zahnrad 150 um, welches fest mit dem Ausgangsreibkegel 105 verbunden ist.

Der Ausgangsreibkegel 105 steht mit einem Reibring 109 in Kontakt und ist mittels des Reibrings 109 mit einem hier nicht weiter gezeigten Eingangsreibkegel wirkverbunden. Zwischen dem Ausgangsreibkegel 105 und dem Reibring 109 wirken Reibkräfte 151 mit einer radialen Reibkräftekomponente 152 und mit einer axialen Reibkräftekomponente 153.

Die Reibkräfte 151 finden ihren Ursprung darin, dass der Ausgangsreibkegel 105, der Reibring 109 und der hier nicht näher gezeigte Eingangsreibkegel miteinander verspannt angeordnet sind. Die Reibkräfte 151 verursachen hierbei Hauptlagerkräfte 160 in den Reibkegellagern 114, 118, welche von den Reibkegellagern 114, 118 aufgenommen werden müssen.

An dem Zahnrad 150, welches mit einem hier nicht näher gezeigten weiteren Getriebeglied wechselwirkt entstehen Koppelkräfte 154 (hier nur exemplarisch eingezeichnet), welche Koppelmomente 155 (hier nur exemplarisch eingezeichnet) bedingen.

Die Koppelmomente 155 erzeugen wiederum Reaktionskräfte 156 (hier nur exemplarisch eingezeichnet), die in einer Lagerhauptebene 141 der radial wirkenden Reibkräftekomponente 152 entgegenwirkt und somit die Hauptlagerkräfte 160 (hier nur exemplarisch eingezeichnet)der Reibkegellager 114, 118 reduziert. Vorteilhafter Weise können durch diese Kräftereduzierung die Reibkegellager 114, 118 kleiner ausgelegt werden, wodurch einerseits Bauraum eingespart und andererseits Gewicht eingespart wird.

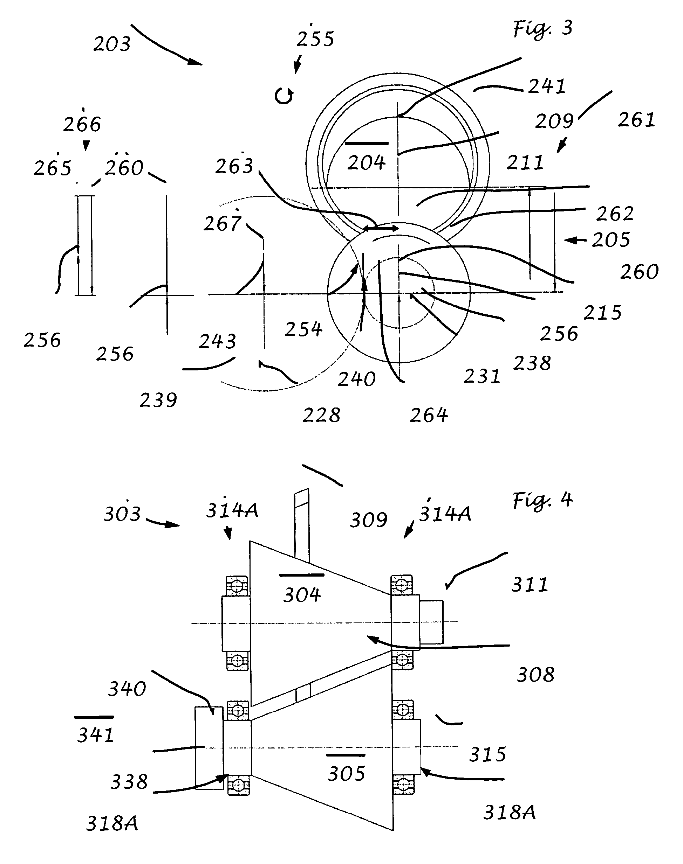

Das in der Figur 3 gezeigte Kegelreibringgetriebe 203 weist einen ersten Reibkegel 204, einen zweiten Reibkegel 205 und einen dazwischen angeordneten Reibring 209 auf. In dieser Darstellung sind die vorherrschenden Kräfte- und Drehmomenteverhältnisse schematisch eingezeichnet, wobei Kräfte auch mehrfach gezeigt und beziffert sein können, um diese in ihrem Wirken in einem Kräfteschema zu zeigen.

Der erste Reibkegel 204 rotiert um eine erste Reibkegellagerachse 211, wobei der zweite Reibkegel 205 entgegen gesetzt um eine zweite Reibkegellagerachse 215 dreht. Mit dem zweiten Reibkegel 205 dreht eine fest mit dem zweiten Reibkegel 205 verbundene Getriebekomponente 238 um, welche als ein Abtriebszahnrad 231 konzipiert ist. Die beiden Reibkegellagerachsen 211, 215 spannen eine Lagerhauptebene 241 auf, in welcher Hauptlagerkräfte 260 als Hauptlagerkräftepaar 261 wirken.

Das Abtriebszahnrad 231 ist in einem Koppelbereich 240 im Eingriff mit einem weiteren Getriebeglied 239, welches als Hauptabtriebswellenzahnrad 228 ausgelegt ist. Das Hauptabtriebswellenzahnrad 228 ist drehbar um eine Hauptabtriebswellenrotationsachse 243 gelagert.

Im Koppelbereich 240 treten Koppelkräfte 254 auf, die aufgrund eines Ausgangdrehmoments 262 am zweiten Reibkegel 205 zwischen dem reibkegelseitigen Abtriebszahnrad 231 und dem getriebeseitigen Hauptabtriebswellenzahnrad 228 anliegen.

Der Koppelbereich 240 ist mit einem Abstand 263 von der Lagerhauptebene 241 entfernt derart angeordnet, so dass zwischen dem Koppelbereich 240 und der Reibkegellagerachse 215 ein Lot 264 gefällt ist.

Die Koppelkräfte 254 bedingen auch hier Koppelmomente 255, die durch den Abstand 263 zwischen dem Koppelbereich 240 und der Lagerhauptebene 241 wiederum Reaktionskräfte 256 erzeugen, welche in der Lagerhauptebene 241 den Hauptlagerkräften 242 entgegengerichtet sind, sodass sich die Hauptlagerkräfte 242 um den Betrag der Reaktionskräfte 256 auf resultierende Kräfte 265 reduzieren, wie aus dem Kräfteschemata 266 zu entnehmen ist. Hinsichtlich des Hauptabtriebswellenzahnrades 228 liegen hierbei vorliegend zu vernachlässigende Hauptabtriebswellenzahnradlagerkräfte an.

Das in der Figur 4 in einer Seitenansicht gezeigte Kegelreibringgetriebe 303 hat einen ähnlichen Aufbau wie das vorstehend beschriebene Kegelreibringgetriebe 203 aus der Figur 3.

Das Kegelreibringgetriebe 303 hat einen ersten Reibkegel 304 und einen zweiten Reibkegel 305, die um einen Spalt 308 beabstandet mit einem Reibring 309 in Wirkkontakt stehen.

Hierbei rotieren der erste Reibkegel 304 um eine erste Reibkegellagerachse 311 und der zweite Reibkegel 305 um eine zweite Reibkegellagerachse 315. Beide Reibkegel 304, 305 sind mit ersten Schrägkugellagern 314A und mit zweiten Schrägkugellagern 318A gelagert.

Der zweite Reibkegel 305 ist mit einer weiteren Getriebekomponente 338 fest verbunden und die weitere Getriebekomponente 338 läuft mit dem zweiten Reibkegel 305 um die zweite Reibkegellagerachse 315 um.

Die Getriebekomponente 338 stellt einen Koppelbereich 340 zur Verfügung, welcher radial beabstandet von einer Lagerhauptebene 341 platziert ist.

Um Wiederholungen zu vermeiden, wird hinsichtlich der Wirkungsweise der hier anliegenden Kräfte und Drehmomente auf die Erläuterung der vorhergehenden Ausführungsbeispiele der Figuren 1 bis 3 verwiesen.

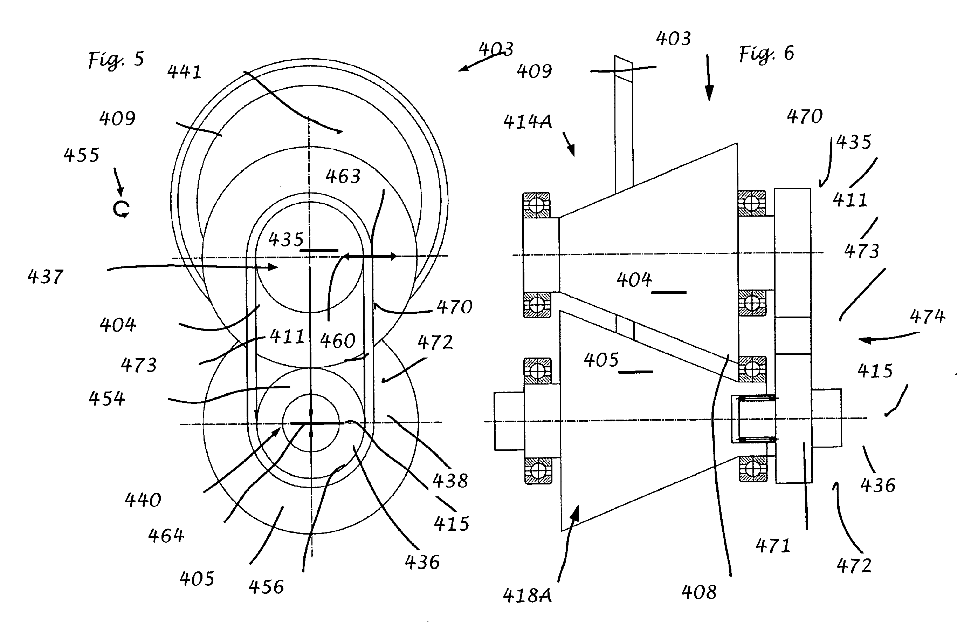

Das in den Figuren 5 und 6 gezeigte Kegelreibringgetriebe 403 umfasst einen ersten Reibkegel 404 und einen zweiten Reibkegel 405, zwischen denen in einem Spalt 408 ein Reibring 409 umläuft. Der erste Reibkegel 404 ist in ersten Schrägkugellager 414A gelagert, sodass er sicher um eine erste Reibkegellagerachse 411 rotieren kann. Entsprechend ist der zweite Reibkegel 405 in zweiten Reibkegellager 418 gelagert und läuft um eine zweite Reibkegellagerachse 415 um.

An dem ersten Reibkegel 404 ist eine erste Getriebekomponente 435 befestigt, die in diesem Ausführungsbeispiel als ein erstes Reibkegelzahnrad 470 ausgebildet ist.

Auf der zweiten Reibkegellagerachse 415 des zweiten Reibkegels 405 ist ein Getriebeglied 436 rotierend an dem zweiten Reibkegel 405 mittels eines Nadelrollenlagers 471 gelagert. Das erste Getriebeglied 436 umfasst ein Getriebegliedzahnrad 472. Hierbei sind das erste Reibkegelzahnrad 470 und das Getriebegliedzahnrad 472 mittels einer Zahnradkette 473 miteinander verbunden. Die Zahnkette 473 ist ein zusätzliches Getriebeglied 474 des Kegelreibringgetriebes 403.

Das erste Reibkegelzahnrad 470 und die Zahnradkette 473 wechselwirken in ersten Koppelbereichen 437 (hier nur exemplarisch beziffert) und das Getriebegliedzahnrad 472 wechselwirkt als weitere reibkegelseitige Getriebekomponente 438 mit der Zahnradkette 473 in zweiten Koppelbereichen 440 (hier nur exemplarisch beziffert) miteinander.

Die ersten und zweiten Koppelbereiche 437, 440 sind von einer Lagerhauptebene 441, welche von den beiden Reibkegellagerachsen 411 und 415 aufgespannt ist, mit einem Abstand 463 (nur exemplarisch eingezeichnet) voneinander beabstandet angeordnet. Die ersten und zweiten Koppelbereiche 437, 440 sind jeweils derart gegenüber den Reibkegellagerachsen 411 und 415 angeordnet, das der Abstand 463 zwischen ihnen ein Lot 464 (nur exemplarisch eingezeichnet) bildet, welches durch die jeweilige Reibkegelrotationsachse 411, 415 und den entsprechenden Koppelbereich 437, 440 verläuft.

Dadurch, dass die beiden Reibkegel 404, 405 über den Reibring 409 miteinander verspannt sind, wirken auf die Schrägkugellager 414A, 418A Hauptlagerkräfte 460, die sich in der Lagerhauptebene 441 erstrecken.

Aus der Zugkraft der Zahnradkette 473 wirken in den Koppelbereichen 437, 440 Koppelkräfte 454, welche Koppelmomente 455 bedingen, die aufgrund der radial entfernten Lage der Koppelbereiche 437, 440 zu der Lagerhauptebene 441 Reaktionskräfte 456 erzeugen, die je nach Zugrichtung der Zugkraft in der Lagerhauptebene 441 entgegen den Hauptlagerkräften 460 wirken können. Vorteilhafter Weise kann durch die Zahnradkette 473 bereits eine Hauptlagerkräftereduzierung erzielt werden, ohne das sich mit den Reibkegeln 404, 405 umlaufende Getriebekomponenten 435, 438 beispielsweise mit einem synchronisierten Zahnrad (siehe Figur 1) oder mit einem Hauptabtriebswellenzahnrad (siehe Figur 1) außerhalb der Lagerhauptachse 441 zwingend im Eingriff befinden müssen.

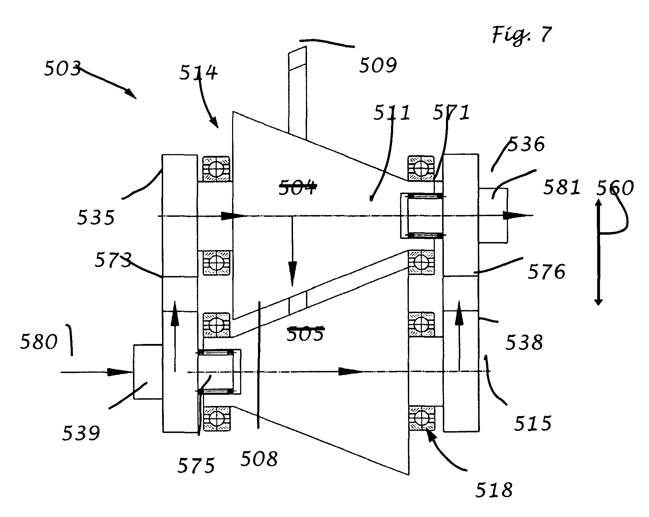

Das in der Figur 7 gezeigte Kegelreibringgetriebe 503 umfasst Reibkegel 504, 505, welche mit einem Spalt 508 beanstandet zueinander angeordnet sind und welche mittels eines Reibringes 509 miteinander in Wirkkontakt stehen. Hierbei sind die beiden Reibkegel 504, 505 mittels des Reibrings 509 in bekannter Weise miteinander verspannt, sodass in den jeweiligen Reibkegellagern 514, 518 entsprechend große Hauptlagerkräfte 560 wirken.

Der erste Reibkegel 504 umfasst eine erste Getriebekomponente 535, die fest mit dem ersten Reibkegel 504 verbunden ist. An dem zweiten Reibkegel 505 ist eine weitere Getriebekomponente 538 vorgesehen, die mit dem zweiten Reibkegel 505 fest verbunden ist.

Des Weiteren ist an dem ersten Reibkegel 504 ein erstes Getriebeglied 536 mittels eines ersten Nadelrollenlagers 571 gelagert. Der erste Reibkegel 504 und das erste Getriebeglied 536 sind mittels des Nadelrollenlagers 571 getrennt drehbar an einer ersten Reibkegellagerachse 511 gelagert. Dementsprechend ist an der zweiten Reibkegellagerachse 515 mit einem zweiten Nadelrollenlager 575 ein weiteres Getriebeglied 539 gelagert. Der zweite Reibkegel 505 kann ebenfalls um die zweite Reibkegellagerachse 515 drehen.

Ähnlich wie bei den vorstehend erläuterten Kegelreibringgetriebe 403 aus den Figuren 5 und 6 ist auch bei diesem Kegelreibringgetriebe 503 die erste Getriebekomponente 535 mit dem weiteren Getriebeglied 539 mittels einer ersten Zahnradkette 573 verbunden. Darüber hinaus sind die weitere Getriebekomponente 538 und das erste Getriebeglied 536 jedoch mit einer zweiten Zahnradkette 576 verbunden.

Die Getriebeglieder 536, 539 und die Getriebekomponenten 535 und 538 stehen über hier nicht näher gezeigte Koppelbereiche mit den Zahnradketten 573, 576 ähnlich in Verbindung, wie hinsichtlich des Kegelreibringgetriebes 403 aus den Figuren 5 und 6 beschrieben, wodurch mittels der Zahnradketten 573 und 576 eine Hauptlagerkräftereduzierung erzielt werden kann, ohne das sich mit den Reibkegeln 404, 405 umlaufende Getriebekomponenten 535, 536, 538 und 539 mit einem ersten Getriebeglied (siehe beispielsweise Figur 1) oder mit einem weiteren Getriebeglied (siehe ebenfalls beispielsweise Figur 1) außerhalb der Lagerhauptachse 441 zwingend im Eingriff befinden müssen. Der besseren Übersichtlichkeit wegen und um Wiederholungen zu vermeiden, wird in diesem Ausführungsbeispiel auf eine weitere Erläuterung der hier wirkenden Kräfte und Drehmomente verzichtet.

Eingezeichnet ist jedoch noch ein möglicher und bevorzugter Leistungsfluss, der beginnend mit einer Eingangsleistung 580, die über die erste Zahnradkette 573 von dem Getriebeglied 539 auf die erste Getriebekomponente 535 und damit weiter in den ersten Reibkegel 504 eingeleitet wird. Von dort aus setzt sich der an dem Getriebeglied 539 eingeleitete Leistungsfluss über den Reibring 509 fort und die Eingangsleistung 580 wird weiter auf den zweiten Reibkegel 505 übertragen, von wo aus der Leistungsfluss über die weitere Getriebekomponente 538 und mittels der zweiten Zahnradkette 576 auf das erste Getriebeglied 536 übertragen wird, und dann als über- oder untersetzte Ausgangsleistung 581 an diesem Getriebeglied 536 abgegriffen werden kann.

### Bezugsziffernliste:

- 1: Getriebe
- 1A: erste Getriebestufe
- 1B: zweite Getriebestufe
- 2: Schaltgetriebe
- 3: Kegelreibringgetriebe
- 4: erster Reibkegel
- 5: zweiter Reibkegel
- 6: Eingangsreibkegel
- 7: Ausgangsreibkegel
- 8: Spalt
- 9: Reibring
- 10: Anpresseinrichtung
- 11: erste Reibkegellagerachse
- 12: Kegelrollenlager
- 13: Zylinderrollenlager
- 14: erste Reibkegellager
- 15: zweite Reibkegellagerachse
- 16: weiteres Kegelrollenlager
- 17: weiteres Zylinderrollenlager
- 18: zweites Reibkegellager
- 19: Trilokwandler
- 20: Antriebszahnrad
- 21: synchronisiertes Zahnrad
- 22: Pumpenrad
- 23: Turbinenrad
- 24: Differentialgetriebeteil
- 25: erste differentielle Seite
- 26: zweite differentielle Seite
- 27: Differentialgetriebezahnrad
- 28: Hauptabtriebswellenzahnrad
- 29: Abtriebsritzel
- 30: Hauptabtriebswelle
- 31: Abtriebszahnrad
- 32: erste Reibungskupplung
- 33: zweite Reibungskupplung
- 34: Gehäuse
- 35: erste Getriebekomponente
- 36: erstes Getriebeglied
- 37: erster Koppelbereich
- 38: weitere Getriebekomponente
- 39: weiteres Getriebeglied
- 40: weiterer Koppelbereich
- 41: Lagerhauptebene
- 42: Differenzialgetrieberotationsachse
- 43: Hauptabtriebswellenrotationsachse
- 54: Koppelkräfte
- 55: Koppelmomente
- 56: Reaktionskräfte
- 60: Hauptlagerkräfte

- 105: Kegelreibringgetriebe
- 109: Reibring
- 114: erste Reibkegellager
- 115: zweite Reibkegellagerachse
- 118: zweites Reibkegellager
- 141: Lagerhauptebene
- 150: Zahnrad
- 151: Reibkräfte
- 152: radial wirkende Reibkräftekomponente
- 153: axial wirkende Reibkräftekomponente
- 154: Koppelkräfte
- 155: Koppelmomente
- 156: Reaktionskräfte
- 160: Hauptlagerkräfte

- 203: Kegelreibringgetriebe
- 204: erster Reibkegel
- 205: zweiter Reibkegel
- 209: Reibring
- 211: erste Reibkegellagerachse
- 215: zweite Reibkegellagerachse
- 228: Hauptabtriebswellenzahnrad
- 231: Abtriebszahnrad
- 238: weitere Getriebekomponente
- 239: weiteres Getriebeglied
- 240: Koppelbereich
- 241: Lagerhauptebene
- 243: Hauptabtriebswellenrotationsachse
- 254: Koppelkräfte
- 255: Koppelmomente
- 256: Reaktionskräfte
- 260: Hauptlagerkräfte
- 261: Hauptlagerkräftepaar
- 262: Ausgangsdrehmoment
- 263: Abstand
- 264: Lot
- 265: resultierende Kräfte
- 266: Kräfteschemata
- 267: Hauptabtriebswellenzahnradlagerkräfte

- 303: Kegelreibringgetriebe
- 304: erster Reibkegel
- 305: zweiter Reibkegel
- 308: Spalt
- 309: Reibring
- 311: erste Reibkegellagerachse
- 314A: erste Schrägkugellager
- 315: zweite Reibkegellagerachse
- 318A: weitere Schrägkugellager
- 338: weitere Getriebekomponente
- 340: Koppelbereich
- 341: Lagerhauptebene

- 403: Kegelreibringgetriebe
- 404: erster Reibkegel
- 405: zweiter Reibkegel
- 408: Spalt
- 409: Reibring
- 411: erste Reibkegellagerachse
- 414A: erste Schrägkugellager
- 415: zweite Reibkegellagerachse
- 418A: zweite Schrägkugellager
- 435: erste Getriebekomponente
- 436: erstes Getriebeglied
- 437: erster Koppelbereich
- 438: weitere Getriebekomponente
- 440: weiterer Koppelbereich
- 441: Lagerhauptebene
- 455: Koppelmomente
- 456: Reaktionskräfte
- 460: Hauptlagerkräfte
- 463: Abstand
- 464: Lot
- 470: erstes Reibkegelzahnrad
- 471: Nadelrollenlager
- 472: Getriebegliedzahnrad
- 473: Zahnradkette
- 474: zusätzliches Getriebeglied

- 503: Kegelreibringgetriebe
- 504: erster Reibkegel
- 505: zweiter Reibkegel
- 508: Spalt
- 509: Reibring
- 511: erste Reibkegellagerachse
- 514: erste Reibkegellager
- 515: zweite Reibkegellagerachse
- 518: zweite Reibkegellager
- 535: erste Getriebegliedkomponente
- 536: erstes Getriebeglied
- 538: weitere Getriebekomponente
- 539: weiteres Getriebeglied
- 560: Hauptlagerkräfte
- 571: erstes Nadelrollenlager
- 573: erste Zahnradkette
- 575: zweites Nadelrollenlager
- 576: zweite Zahnradkette
- 580: Eingangsleistung
- 581: Ausgangsleistung

## Patentansprüche

1. Kegelreibringgetriebe (3) mit einem ersten Reibkegel (4), mit einem zweiten Reibkegel (5), mit einem Reibring (9) und mit wenigstens einem weiteren Getriebeglied (36, 39), bei welchem der erste Reibkegel (4) mittels erster Reibkegellager (14) rotierend um eine erste Reibkegellagerachse (11) und der zweite Reibkegel (5) mittels zweiter Reibkegellager (18) rotierend um eine zweite Reibkegellagerachse (15) gelagert ist, bei welchem die beiden Reibkegel (4, 5) mittels des Reibrings (9) verspannt zueinander angeordnet sind, bei welchem sich hinsichtlich der Reibkegellagerachsen (11, 15) radial wirkende Hauptlagerkräfte (60) in einer von den beiden Reibkegellagerachsen (11, 15) aufgespannten Lagerhauptebene (41) erstrecken, bei welchem das wenigstens eine weitere Getriebeglied (36, 39) den Reibkegeln (4, 5) vorgeschaltet oder nachgeschaltet ist und bei welchem zwischen einem der Reibkegel (4, 5) und dem wenigstens einem weiteren Getriebeglied (36, 39) Koppelmomente wirken können, **dadurch gekennzeichnet, dass** die von den Koppelmomenten (55) erzeugten Reaktionskräfte (56) den Hauptlagerkräften (60) in der Lagerhauptebene (41) entgegen gerichtet sind.

2. Kegelreibringgetriebe (3) nach Anspruch 1, **dadurch gekennzeichnet, dass** die Koppelmomente (55) durch Koppelkräfte (54) in einem Koppelbereich (37, 40) bedingt sind, der radial entfernt von der Lagerhauptebene (41) derart angeordnet ist, dass sich in der Lagerhauptebene (41) erstreckende durch die Koppelkräfte (54) erzeugte Reaktionskräfte (56) sich den in der Lagerhauptebene (41) erstreckenden Hauptlagerkräften (60) entgegen wirken können.

3. Kegelreibringgetriebe (3) nach Anspruch 1 oder 2, **dadurch gekennzeichnet, dass** reibkegelseitig an den Reibkegellagerachsen (11, 15) eine fest mit dem Reibkegel (4, 5) verbundene Getriebekomponente (35, 38) vorgesehen ist, die sich in einem Koppelbereich (37, 40) mit dem wenigstens einem weiteren Getriebeglied (36, 39) in Eingriff befindet.

4. Kegelreibringgetriebe (3) nach einem der Ansprüche 1 bis 3, **dadurch gekennzeichnet, dass** reibkegelseitig Zahnräder (470) vorgesehen sind und das wenigstens eine Getriebeglied eine Kette (473) umfasst.

5. Kegelreibringgetriebe (3) nach einem der Ansprüche 1 bis 4, **dadurch gekennzeichnet, dass** reibkegelseitig Zahnräder (20) vorgesehen sind und das wenigstens eine Getriebeglied (36) ein Zahnrad (21) umfasst.

6. Kegelreibringgetriebe (3) nach einem der Ansprüche 2 bis 5, **dadurch gekennzeichnet, dass** zwischen dem Koppelbereich (240) und einer (215) der beiden Reibkegellagerachsen (211, 215) ein Lot (264) der Lagerhauptebene (241) angeordnet ist.

7. Kegelreibringgetriebe (3) nach einem der Ansprüche 1 bis 6, **dadurch gekennzeichnet, dass** eine Rotationsachse (42) von rotierenden weiteren Getriebegliedern (36) fluchtend zu den Reibkegellagerachsen (11, 15) und neben der von den Reibkegellagerachsen (11, 15) aufgespannten Lagerhauptebene (41) angeordnet ist.

8. Kegelreibringgetriebe (3) nach einem der Ansprüche 1 bis 7, **dadurch gekennzeichnet, dass** die Lagerhauptebene (41) gegenüber einer Getriebeunterseite oder einer Fahrbahnoberfläche derart in dem Kegelreibringgetriebe (3) ausgerichtet ist, dass zwischen der Lagerhauptebene (41) und der Getriebeunterseite und/oder der Fahrbahnebene ein Winkel von mehr als 20° angeordnet ist.

9. Verfahren zum stufenlosen Übertragen von Drehmomenten mittels eines Kegelreibringgetriebes (3), bei welchem bei der Drehmomenteübertragung zwischen einer Reibkegelseite und einer Getriebeseite oder umgekehrt Koppelmomente (55) zwischen der Reibkegelseite und der Getriebeseite wirken, welche Reaktionskräfte (56) in Reibkegellagern (14, 18) erzeugen, **dadurch gekennzeichnet, dass** diejenige Komponente der Reaktionskräfte (56), welche sich in einer Lagerhauptebene (41) zweier Reibkegellagerachsen (14, 18) erstreckt, entgegen gesetzt einer sich in der Lagerhauptebene (41) erstreckenden Hauptlagerkräftekomponente (60) wirkt.

10. Verfahren nach Anspruch 9, **dadurch gekennzeichnet, dass** die Drehrichtung der Reibkegel (4, 5) umgekehrt wird, um einen Rückwärtsgang an einem Fahrzeug zu realisieren.
